# EUROPÄISCHE PATENTSCHRIFT

(11) **EP 1 398 246 B1**
(45) Veröffentlichungstag und Bekanntmachung des Hinweises auf die Patenterteilung: **08.06.2005**
(21) Anmeldenummer: 03012850.8
(22) Anmeldetag: 06.06.2003
(51) Int. Cl.: B62D 21/15

(54) **Kraftfahrzeug mit einer Vorderwagen-Tragstruktur**
Vehicle with a support frame for a car body front structure
Véhicule automobile avec support porteur pour structure avant de caisse

(30) Priorität: 12.09.2002 DE 10242282
(43) Veröffentlichungstag der Anmeldung: 17.03.2004
(73) Patentinhaber: Dr.Ing. h.c.F. Porsche Aktiengesellschaft, 70435 Stuttgart (DE)
(72) Erfinder: Soja, Heinz, Dr., 71263 Weil der Stadt (DE)

(56) Entgegenhaltungen:
- EP-A- 1 095 842
- DYCKHOFF J ET AL: "FASERVERBUNDKUNSTSTOFF-TRAEGER MIT CRASHFUNKTION" ATZ AUTOMOBILTECHNISCHE ZEITSCHRIFT, FRANCKH'SCHE VERLAGSHANDLUNG. STUTTGART, DE, Bd. 101, Nr. 7/8, Juli 1999 (1999-07), Seiten 574-580, XP000832772 ISSN: 0001-2785

## Beschreibung

Bei der Erfindung wird ausgegangen von einem Kraftfahrzeug mit einer Vorderwagen - Tragstruktur, gemäß Oberbegriff des Anspruchs 1.

Ein gattungsbildendes Kraftfahrzeug ist der DE 195 32 858 A1 zu entnehmen. Dieses Kraftfahrzeug umfasst einen Tragrahmen, der eine Vorderwagen - Tragstruktur aufweist, die zumindest zwei sich in Fahrzeuglängsrichtung erstreckende Längsträger besitzt, an deren freien Enden ein Stoß - Schutzelement angeordnet ist, welches sich in Fahrzeugquerrichtung erstreckt. Hinter dem Stoß - Schutzelement liegt ein Eindringraum, in den sich bei einem Fahrzeugaufprall beispielsweise auf einen Pfahl sich verformende Fahrzeugteile hinein bewegen können. Bei dem bekannten Kraftfahrzeug soll das Stoß - Schutzelement derart formsteif ausgebildet sein, dass Aufprallkräfte nahezu gleichmäßig verteilt in die beiden Längsträger eingeleitet werden. Nachteilig dabei ist, dass das Stoß - Schutzelement aufgrund seiner formsteifen Ausbildung ein hohes Gewicht aufweisen muss, um die auftretenden Aufprallkräfte verteilen und weiterleiten zu können. Das Fahrzeuggewicht ist somit entsprechend groß.

Die EP-A-1 095 842 zeigt ein Kraftfahrzeug mit einer Vorderwagen - Tragstruktur, an deren Unterseite ein schräg verlaufendes Crashzugband vorgesehen ist

Aufgabe der Erfindung ist es daher, ein Fahrzeug der gattungsbildenden Art anzugeben, welches den angeführten Nachteil nicht aufweist.

Gelöst wird diese Aufgabe mit einem Kraftfahrzeug, welches die in Anspruch 1 genannten Merkmale besitzt. Weitere, die Erfindung ausgestaltende Merkmale sind in den Unteransprüchen angegeben.

Die mit der Erfindung hauptsächlich erzielten Vorteile sind darin zu sehen, dass bei einem Pfahlaufprall des Kraftfahrzeugs durch das erfindungsgemäß vorgesehene flexible Faserband einerseits eine Energieabsorption bzw. Energieumwandlung der Aufprallenergie stattfindet und andererseits ein zu weites Eindringen des Pfahls in den Eindringraum vermieden wird, wenn das Kraftfahrzeug nicht mit einem der beiden Längsträger direkt auf den Pfahl trifft. Insbesondere kann in einigen Fällen beispielsweise beim Pfahlaufprall das Risiko zumindest vermindert werden, dass der Eindringraum oder dahinter liegende Fahrzeugkomponenten eine starke Deformation erfahren. Außerdem ist durch das geringe Gewicht der Fasermatte das Fahrzeuggesamtgewicht nur geringfügig beeinflusst. Für das erfindungsgemäß am Tragrahmen befestigte Faserband als Stoß - Schutzelement wird vorzugsweise reißfestes, undurchdringbares Fasermaterial, vorzugsweise aus Kunststoff, verwendet, welches beispielsweise in undurchdringbaren Schutzwesten im Personenschutz oder zur Panzerung ggf. von Blechtafeln verwendet wird.

Es können mehrlagige Faserbänder und so hergestellte Gewebematten vorgesehen sein, wobei außerdem Faserbänder aus verschiedenen Fasermaterialien zu der mehrlagigen Gewebematte zusammengesetzt sein können, wie nach Anspruch 2 vorgeschlagen. Selbstverständlich können die mehreren Lagen unterschiedlich ausgebildet sein oder aus verschiedenen Materialien bestehen, so dass unterschiedliche physikalische Eigenschaften an den einzelnen Lagen vorliegen. Verwendbar sind außerdem Fasermischgewebe, die verschiedene Faserwerkstoffe in einer Lage des Faserbandes aufweisen oder das Faserband besteht aus einem derartigen Mischgewebe. Zwischen zwei Lagen des Faserbandes oder auch in das Faserband direkt können Einlagen eingearbeitet werden, die aus anderen Materialien, beispielsweise Metall, bestehen. Außerdem ist es möglich, das Faserband oder einzelne Lagen bzw. die Gewebematte als Faserverbundwerkstoff (Anspruch 3) herzustellen, bei dem die Fasern in eine Kunststoffmatrix eingebettet sind.

Bei einem in Anspruch 4 angegebenen Ausführungsbeispiel kann das Faserband mit seinen Enden an den freien Enden der Längsträger befestigt sein. Alternativ kann es sich auch zwischen den Längsträgern erstrecken. Denkbar wäre es allerdings auch, mehrere Faserbänder - in Fahrzeuglängsrichtung gesehen - hintereinander ggf. mit Abstand zueinander anzuordnen.

Zur Verstärkung der Vorderwagen - Tragstruktur kann gemäß Anspruch 5 eine sich zwischen den Längsträgern erstreckende Querabstützung vorgesehen sein.

Ein bevorzugtes Ausführungsbeispiel zeichnet sich dadurch aus, dass die Enden des Faserbandes ein- und/oder ausreissbar an der Vorderwagen - Tragstruktur befestigt sind. Bei dem Ein- und/oder Ausreissvorgang aus der Befestigung des Faserbandes wird durch plastische Materialverformung weitere Energie beim Aufprall abgebaut, wodurch die Energieabsorption durch das Faserband an der Vorderwagen - Tragstruktur verbessert ist.

Die Erfindung wird nachfolgend anhand von Ausführungsbeispielen mit Bezug auf die Zeichnung näher erläutert.

Es zeigen:
- Fig. 1: schematisch einen Ausschnitt eines Kraftfahrzeugs mit einer Vorderwagen - Tragstruktur mit einem Stoß - Schutzelement,
- Fig. 2: einen Schnitt durch die Vorderwagen - Tragstruktur gemäß Linie II - II in Fig. 1,
- Fig. 3: in Vergrößerung einen Teilschnitt durch das Stoß - Schutzelement der Vorderwagen - Tragstruktur in Fig. 2 und
- Fig. 4: die Vorderwagen - Tragstruktur bei einem Pfahlaufprall.

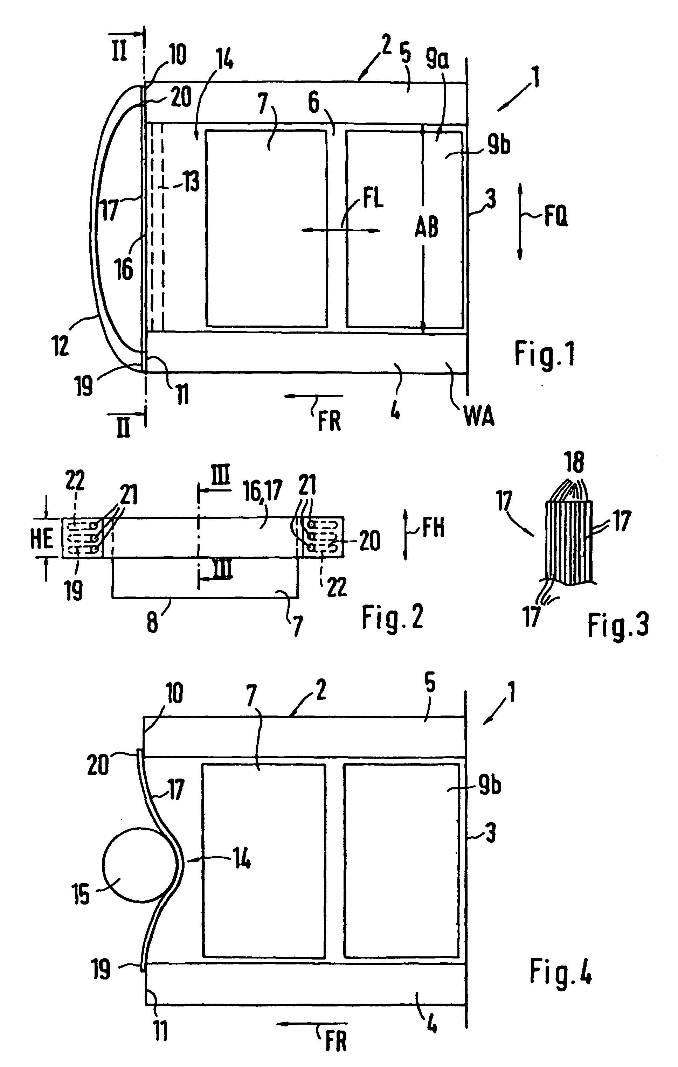

In Fig. 1 ist ausschnittweise ein Tragrahmen 1 eines hier nicht näher dargestellten Kraftfahrzeugs stark vereinfacht widergegeben. Der Tragrahmen 1 weist am Vorderwagen WA des Kraftfahrzeugs eine Vorderwagen - Tragstruktur 2 auf, die - in Fahrtrichtung FR gesehen - vor einer Stirnwand 3 der Fahrzeugkarosserie liegt, welcher Tragrahmen 1 der Fahrzeugkarosserie bzw. dem Rohbau zugeordnet ist. Die Vorderwagen - Tragstruktur 2 setzt sich zumindest aus zwei in Fahrzeuglängsrichtung FL verlaufenden Längsträgern 4 und 5 zusammen, die beispielsweise parallel und mit seitlichem Abstand AB zueinander angeordnet sind. Zwischen den Längsträgern 4 und 5 ist ein Freiraum 6 gebildet, in dem bei dem Kraftfahrzeug ein Ablagekasten 7 beispielsweise mit einer Bodenwanne 8 (Fig. 2) angeordnet ist. Der Ablagekasten 7 mit seiner Bodenwanne dient insbesondere der Beförderung von mitzuführendem Ladegut, wie beispielsweise Gepäck oder dgl.. Beim dem Kraftfahrzeug handelt es sich zum Beispiel um einen Personenwagen, bei dem die Antriebsmaschine in Mittelmotoranordnung oder im Heckbereich des Kraftfahrzeugs angeordnet ist. In Fahrtrichtung FR gesehen vor der Stirnwand 3 und zwischen dem zumindest einen Ablagekasten 7 liegt ein zu schützender Fahrzeugbereich 9a, in dem ein Behälter 9b angeordnet sein kann, der an dem Tragrahmen 1 bzw. an der Vorderwagen - Tragstruktur 2 befestigt ist. Sowohl der Ablagekasten 7 als auch der Fahrzeugbereich 9a sind hier lediglich rechteckig angedeutet; sie können selbstverständlich eine andere Körperform als die dargestellte besitzen und ferner in anderer Reihenfolge angeordnet sein. An den freien Enden 10 und 11 der Längsträger 4 und 5 kann ein sog. Stoßfängerquerträger 12 befestigt sein, der - wie dargestellt - ggf. gebogen verläuft und in Fig. 4 der Einfachheit halber weggelassen ist. Außerdem kann sich zwischen den Längsträgern 4 und 5, also parallel zur Fahrzeugquerrichtung FQ wenigstens eine Querabstützung 13 erstrecken, die in Fig. 1 lediglich gestrichelt angedeutet ist. Neben den Längsträgern 4 und 5 kann die Tragstruktur 2 also weitere Tragelemente aufweisen.

Bei einer Kollision des Kraftfahrzeugs mit einem anderen Kraftfahrzeug oder mit einem Gegenstand bzw. Hindernis können sich Teile der Vorderwagen - Tragstruktur 2 und ggf. auch der Beplankung der Karosserie in Richtung zur Stirnwand 3 bewegen, so dass diese Teile, wie beispielsweise der Stoßfängerquerträger 12 und/oder die Querabstützung 13, entgegen der Fahrtrichtung FR in einen Eindringraum 14 zwischen den Längsträgern 4 und 5 hinein treten können. Der Eindringraum 14 ist hier nicht statisch zu betrachten, sondern vielmehr kann er sich bis in den Freiraum 6 hinein erstrecken, also beispielsweise auch den Ablagekasten 7 und in einem ungünstigen Fall auch den Fahrzeugbereich 9a mit einnehmen. Bei einem Aufprall des Kraftfahrzeugs auf einen Pfahl 15 (Fig. 4) kann der Fahrzeugbereich 9a in vielen Fällen, beispielsweise bis zu einer vorgebbaren Fahrzeuggeschwindigkeit, vor Beschädigung geschützt werden, da die Vorderwagen - Tragstruktur 2 mit einem Stoß - Schutzelement 16 ausgestattet ist, das - in Fahrtrichtung FR gesehen - querverlaufend vor dem Eindringraum 14 liegt. Das Stoß - Schutzelement 16 verläuft somit in Fahrzeugquerrichtung FQ und ist als flexibles, undurchdringbares und reißfestes Faserband 17 ausgebildet, das - in Fahrtrichtung FR gesehen - mit mehreren Lagen 18 von einzelnen Faserbändem hintereinander (Fig. 3) ausgestattet sein kann, also als mehrlagige Gewebematte realisierbar ist. Die einzelnen Lagen 18 können miteinander verbunden oder lose aufeinander gelegt und ggf. nur abschnittsweise aneinander befestigt sein. Mit seinen Enden 19 und 20 ist das Faserband 17 an der Vorderwagen - Tragstruktur 2 aufgespannt und damit verbunden bzw. daran befestigt. Beispielsweise ist vorgesehen, die Faserband - Enden 19 und 20 mit den Längsträgem 4 und 5, insbesondere mit deren freien Enden 10 und 11, zu verbinden, wie dies in Fig. 2 zu sehen ist. Selbstverständlich wäre es auch denkbar, das Faserband 17 zwischen den Längsträgern 4 und 5 anzuordnen und daran zu befestigen. Es können auch mehrere Faserbänder 17 - in Fahrtrichtung FR gesehen - hintereinander ggf. mit Abstand zueinander angeordnet sein. Die in Fahrzeughochrichtung FH gemessene Höhe HE des Faserbandes 17 kann der Querschnittshöhe der Längsträger 4 bzw. 5 entsprechen, geringer oder größer als diese Querschnittshöhe sein.

Für die Befestigungen der Enden 19 und 20 an der Vorderwagen - Tragstruktur 2 können mehrere Befestigungselemente 21 vorgesehen sein, die das Faserband 17 bzw. die Lagen 18 durchdringen und in der Tragstruktur 2 festgelegt sind. Diese Befestigungselemente 21 können beispielsweise Schrauben, Bolzen oder dgl. sein, die durch in die Faserenden 19 und 20 eingebrachte Durchbrüche hindurchgreifen. Die Befestigungselemente 21 können in Fahrzeughochrichtung FH und ggf. auch in Fahrzeugquerrichtung FQ mit Abstand zueinander liegen. Durch die punktuelle Befestigung des Faserbandes 17 mittels der Befestigungselemente 21 an der Vorderwagen - Tragstruktur 2 kann bei dem Aufprall des Fahrzeugs auf den Pfahl 15 ein Ein- oder Ausreissen des Faserbandes 17 eingeleitet werden, wie dies gestrichelt in Fig. 2 durch Bezugzeichen 22 gezeigt ist. Das flexible Faserband 17 kann sich zumindest bereichsweise um den Umfang des Pfahls 15 legen, wie dies in Fig. 4 zu sehen ist. Ggf. kann das flexible Faserband 17 auch in gewissem Maße dehnbar sein. Jedenfalls kann durch das Faserband 17 der Pfahlaufprall in gewissem Maß abgefangen werden, wodurch Deformationen im Fahrzeugbereich 9a abgeschwächt werden können.

## Patentansprüche

1. Kraftfahrzeug mit einer Vorderwagen - Tragstruktur, die wenigstens zwei sich in Fahrzeuglängsrichtung erstreckende Längsträger umfasst, wobei zwischen den Längsträgern ein Eindringraum angeordnet ist, und mit einem sich in Fahrzeugquerrichtung erstreckenden Stoß - Schutzelement, **dadurch gekennzeichnet, dass** als Stoß - Schutzelement (16) quer vor dem Eindringraum (14) ein flexibles, undurchdringbares Faserband (17) an der Vorderwagen - Tragstruktur (2) befestigt ist.

2. Kraftfahrzeug nach Anspruch 1, **dadurch gekennzeichnet, dass** das Faserband (17) mehrlagig als Gewebematte, insbesondere aus verschiedenen Faserbändern (17) ausgebildet ist.

3. Kraftfahrzeug nach Anspruch 1 oder 2, **dadurch gekennzeichnet, dass** wenigstens eine Lage (18) des Faserbandes (17) oder das Faserband (17) durch einen Faserverbundwerkstoff gebildet ist.

4. Kraftfahrzeug nach einem der vorhergehenden Ansprüche, **dadurch gekennzeichnet, dass** das Faserband (17) mit seinen Enden (19, 20) an den freien Enden (10, 11) der Längsträger (4, 5) befestigt ist oder sich zwischen den Längsträgern (4, 5) erstreckt.

5. Kraftfahrzeug nach Anspruch 1, **dadurch gekennzeichnet, dass** die Längsträger über eine Querabstützung (13) miteinander verbunden sind.

6. Kraftfahrzeug nach einem der vorhergehenden Ansprüche, **dadurch gekennzeichnet, dass** die Antriebsmaschine des Kraftfahrzeugs im Heckbereich oder in Mittelmotoranordnung vorgesehen ist.

7. Kraftfahrzeug nach einem der vorhergehenden Ansprüche, **dadurch gekennzeichnet, dass** die Enden (19, 20) des Faserbandes (17) ein- und / oder ausreißbar an der Vorderwagen - Tragstruktur (2) befestigt sind.

## Claims

1. A motor vehicle with a front-part support structure which comprises at least two longitudinal supports extending in the longitudinal direction of the vehicle, wherein a penetration space is situated between the longitudinal supports, and with an impact-protection element extending in the transverse direction of the vehicle, **characterized in that** a flexible, impenetrable fibre band (17) is fastened as the impact-protection element (16) on the front-part support structure (2) transversely in front of the penetration space (14).

2. A motor vehicle according to Claim 1, **characterized in that** the fibre band (17) is formed in a plurality of layers as a fabric mat, in particular from different fibre bands (17).

3. A motor vehicle according to Claim 1 or 2, **characterized in that** at least one layer (18) of the fibre band (17) is formed or the fibre band (17) is formed by a composite fibre material.

4. A motor vehicle according to one of the preceding Claims, **characterized in that** the fibre band (17) is fastened by its ends (19, 20) to the free ends (10, 11) of the longitudinal supports (4, 5) or extends between the longitudinal supports (4, 5).

5. A motor vehicle according to Claim 1, **characterized in that** the longitudinal supports are connected to each other by way of a transverse support means (13).

6. A motor vehicle according to one of the preceding Claims, **characterized in that** the driving engine of the motor vehicle is provided in the tail region or in a mid-engine arrangement.

7. A motor vehicle according to one of the preceding Claims, **characterized in that** the ends (19, 20) of the fibre band (17) are fastened to the front-part support structure (2) in such a way that they can be removed and/or pulled out.

## Revendications

1. Véhicule avec une structure porteuse de la caisse avant, qui comporte au moins deux longerons qui s'étendent dans le sens longitudinal du véhicule, un espace de pénétration étant agencé entre les longerons, et avec un élément amortisseur de chocs qui s'étend dans le sens transversal du véhicule, **caractérisé en ce que** pour former l'élément amortisseur de chocs (16), une bande de fibres (17) flexible, non transperçable, est fixée contre la structure porteuse de la caisse avant (2) en amont de l'espace de pénétration (14).

2. Véhicule selon la revendication 1, **caractérisé en ce que** la bande de fibres (17) est conçue sous forme de nappe textile multicouche, en particulier formée par différentes bandes de fibres (17).

3. Véhicule selon la revendication 1 ou 2, **caractérisé en ce qu'**au moins une couche (18) de la bande de fibres (17) ou la bande de fibres (17) est formée par un matériau composite renforcé par fibres.

4. Véhicule selon l'une quelconque des revendications précédentes, **caractérisé en ce que** la bande de fibres (17) avec ses extrémités (19, 20) est fixée contre les extrémités libres (10, 11) des longerons (4, 5) ou s'étend entre les longerons (4, 5).

5. Véhicule selon la revendication 1, **caractérisé en ce que** les longerons sont reliés entre eux par un support transversal (13).

6. Véhicule selon l'une quelconque des revendications précédentes, **caractérisé en ce que** le moteur du véhicule est prévu dans la partie arrière ou dans une partie centrale.

7. Véhicule selon l'une quelconque des revendications précédentes, **caractérisé en ce que** les extrémités (19, 20) de la bande de fibres (17) sont fixées contre la structure porteuse de la caisse avant (2) de telle sorte qu'elles peuvent se déchirer ou s'arracher.
